# EUROPEAN PATENT SPECIFICATION

(11) **EP 2 374 951 B1**
(45) Date of publication and mention of the grant of the patent: **09.11.2016**
(21) Application number: 10250919.7
(22) Date of filing: 13.05.2010
(51) Int. Cl.: E04B 1/78, F24D 19/06

(54) **Method and Apparatus for providing a heat barrier layer to a radiator**
Methode und Vorrichtung zur Bereitstellung einer Wärmeschutzschicht an einem Radiator
Procédé et dispositif de provision de barrière calorifique sur un radiateur

(30) Priority: 01.04.2010 GB 201005606
(43) Date of publication of application: 12.10.2011
(73) Proprietor: Anchor Magnets Limited, Sheffield S9 5AH (GB)
(72) Inventor: Burton, Michael Eric, Sheffield S8 7DX (GB)
(74) Representative: Atkinson, Ralph

(56) References cited:
- EP-A1- 0 087 278
- DE-A1- 3 320 365
- DE-U1- 29 604 098

## Description

The present invention relates to an apparatus providing a heat barrier layer to a radiator and a method of providing a heat barrier layer to a surface of a radiator.

It is well known to provide radiators in a room for the purposes of providing heat to the room. Generally, such radiators are positioned parallel to and close to a wall. During use, the radiator heats up the room by radiating heat into the room and also by conducting heat to the surrounding air which consequently initiates convection currents around the radiator. However, radiant heat is also emitted from the rear of the radiator that is incident upon the wall adjacent to the radiator, resulting in the wall being heated. The heat absorbed by the wall is a particular problem when the wall is an external wall of the building, because in this case heat conducts through the wall and out of the building.

Solutions to this problem have been considered that involve providing insulation to the wall, at least in the region of the radiator. However, a problem with this solution is that the radiator must be removed from the wall and the heating system, in order to provide access to the wall for installation of the insulation.

Magnetic composite films of the type disclosed in DE 33 20 365 A1 have been previously used in applications to provide cooling, such as, in this case, to the interior of motor vehicles. This disclosure does not address the difficulties of maintaining heat in a room in a domestic environment which utilises central heating systems, however.

An example of a heat reflecting panel intended to be located between a central heating radiator and a wall in order to reduce heat losses through the wall is described in EP 0 087 278 A1. The heat reflecting panel is spaced away from the radiator in order to keep the panel cool but this provides a disadvantage of requiring additional space behind the radiator.

According to a first aspect of the present invention, there is provided a method of providing a heat barrier layer to a surface of a radiator, said method comprising: obtaining a piece of layered material comprising a magnetic first layer defining magnetic poles and a second layer having a higher reflectance of infrared than said first layer; and attaching said piece of layered material to said radiator by means of a force produced by said magnetic poles characterised in that: said first layer is attached directly to said radiator such that said second layer provides the radiator with a low emissivity rear surface relative to a front surface of said radiator.

According to a second aspect of the present invention, there is provided apparatus providing a heat barrier layer to a radiator, comprising: a radiator; and a layered material, said layered material comprising: a first layer having a first surface defining a series of magnetic poles and a second surface separated from said first surface by the thickness of said first layer; and a second layer having a surface bonded to one of said first surface and said second surface of said first layer, wherein said second layer provides a higher reflectivity of infrared than said first layer, characterised in that: said first layer is attached directly to said radiator such that said second layer provides the radiator with a low emissivity rear surface relative to a front surface of said radiator.

In a preferred embodiment said rear surface of said radiator has an emissivity of more than 90%.

In a preferred embodiment said rear surface of said radiator is a bare metal surface and said front surface is non-metal.

Preferably, said rear surface of said radiator is formed of aluminium.

In a preferred embodiment said front surface of said radiator comprises a coating. Preferably said coating is paint or enamel.

The invention will now be described by way of example only, with reference to the accompanying drawings, of which:
Figure 1 shows a rectangular sheet 101 of layered material embodying the present invention;
Figure 2 shows the layered material of Figure 1 rolled up into a cylindrical roll 201;
Figure 3 shows an enlarged side view of the edge of the sheet 101;
Figure 4 shows the enlarged side view of the sheet, previously shown in Figure 3, but with the location of magnetic poles indicated;
Figure 5 shows an enlarged side view of an alternative sheet 501 of layered material embodying the present invention;
Figure 6 shows a method of manufacturing the layered material from which the sheet of Figure 1 is formed;
Figure 7 illustrates a method of providing a heat barrier layer to a radiator;
Figure 8 shows several sheets of layered material 703 and 801 to 807 positioned around a radiator 701;
Figure 9 shows the radiator 701 with the sheets 703 and 801 to 807 in place;
Figure 10 shows a plan view of the radiator 701 with the sheets 703 and 801 to 807 in place;
Figure 11 shows a plan view of an alternative radiator 1101 with the sheets 1102 of the layered material 601 attached; and
Figure 12 shows a cylindrical tank 1201 in cross-section, with a sheet 1203 of layered material 601 extending around its circumference.

### Figures 1 and 2

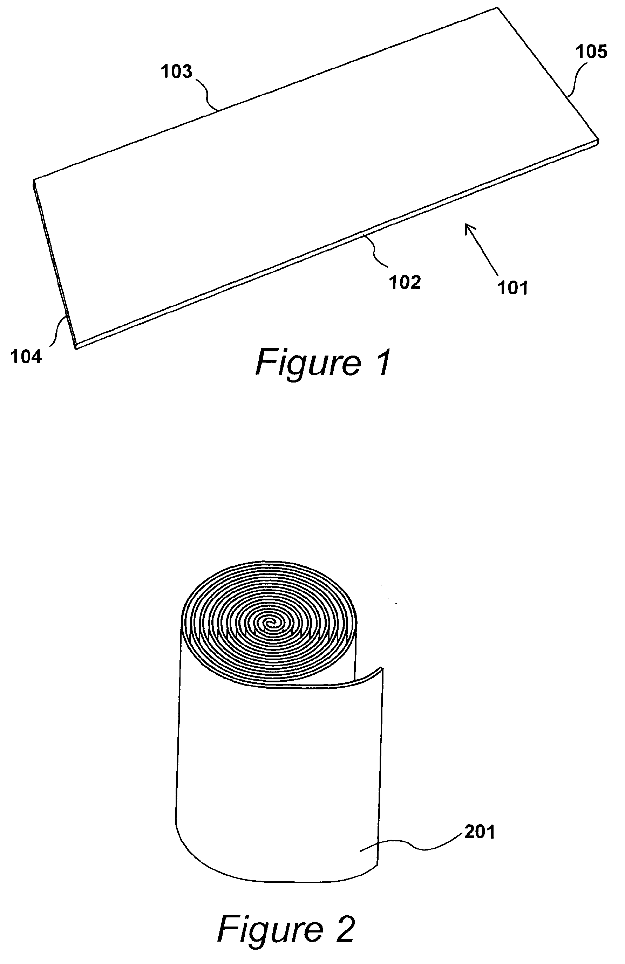

A rectangular sheet 101 of layered material embodying an aspect of the present invention is shown in the perspective view of Figure 1. The rectangular sheet 101 has a pair of opposing edges 102 and 103 extending along its length and a second pair of opposing edges 104 and 105 extending across its width.

The rectangular sheet 101 is shown in a flat configuration in Figure 1, but as will be understood from the following description, the layered material is flexible and may be curled or bent by hand. Consequently, it is anticipated that the material will be supplied for use in packs of flat sheets, similar to sheet 101 illustrated in Figure 1, or alternatively it will be supplied for use rolled up and packed in a substantially cylindrical form. In a preferred embodiment, the rolled-up material has a width of between 5cm and 100cm and a length of between 5m and 10m. Such rolled-up layered material is shown in Figure 2 rolled into a cylindrical roll 201.

### Figure 3

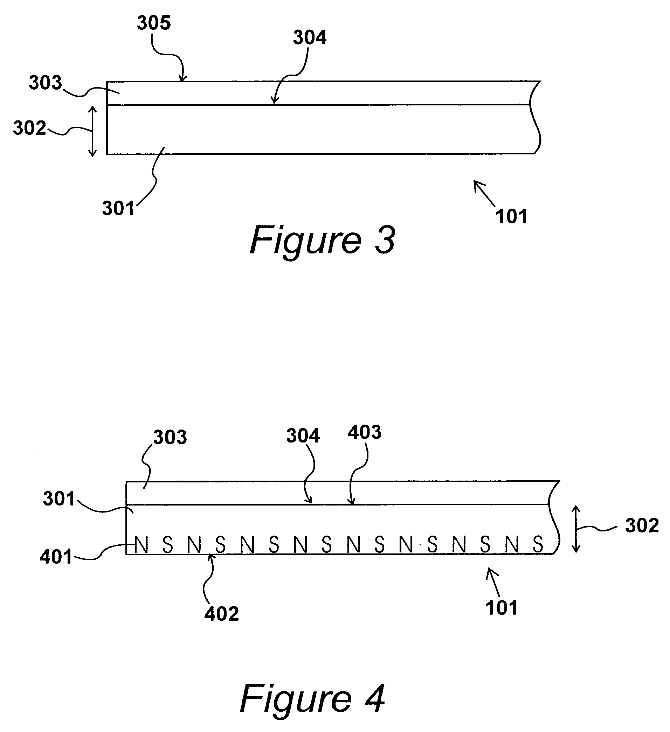

An enlarged side view of the edge of the sheet 101 of layered material is shown in Figure 3. In the present embodiment, the layered material comprises two layers. The first layer 301 is formed of a piece of magnetic sheet, also known as magnetic rubber sheet or magnetic foil. The magnetic sheet is well known for use in the production of magnetic vehicle signs, fridge magnets, etc., and it is typically formed of a polymeric material containing magnetised particles.

The first layer 301 has a relatively small thickness 302 when compared to its length and width (as may be seen in Figure 1). In the present embodiment the thickness of the magnetic first layer is 0.5 mm, but other embodiments are envisaged in which the thickness of the first layer is between 0.2mm and 2mm.

The second layer 303 has a first surface 304 bonded to one of the surfaces of the first layer 301. The second layer is formed of a material chosen to provide lower emissivity (and higher reflectivity) of infrared than said first layer. In the present embodiment the second layer is formed of aluminium foil having a thickness of 90 microns (0.09mm), and has a clean, exposed second surface 305.

In the present embodiment the first layer 301 is bonded to the second layer 303 by a heat bonding process, and consequently the layered material sheet 101 has only two layers.

In alternative embodiments the second layer is formed of aluminium foil having a thickness other than 0.09mm. For example other embodiments have aluminium foil thickness of between 0.02mm and 0.2mm, and typically have a thickness of 0.03mm, 0.05mm or 0.07mm, but in preferred embodiments the thickness is between 0.030mm and 90mm.

In other alternative embodiments the second layer comprises a sheet of metal other than aluminium, but like the main embodiment it has an exposed second surface providing lower emissivity (and higher reflectivity) to infrared than the magnetic first layer.

In some alternative embodiments, the second layer is formed of a polymeric sheet to which a relatively thin metallic layer is applied.

In alternative embodiments, metals other than aluminium are used to form the second layer. However, it is essential that the second layer is more reflective to infrared than the magnetic first layer, and in preferred embodiments, the exposed surface of the second layer has a reflectance to long wavelength infrared of more than 90%.

It should be noted that for the purposes of the present specification the word "aluminium" refers to aluminium alloys in which aluminium is the main component, as well as pure aluminium.

Similarly, for the purposes of the present specification the word "metal" refers to metal alloys as well as pure metals.

### Figure 4

The enlarged side view of the sheet 101 of layered material, shown in Figure 3, is shown again in Figure 4 but with the location of the magnetic poles indicated.

The first layer 301 is magnetised such that a series of magnetic poles 401 are provided at a first surface 402 of the first layer. The magnetic poles 401 are arranged in parallel lines (extending into the page of Figure 4) such that alternating north and south poles extend across the surface 402, as is known in the art.

In the present embodiment, the poles extend across the width of the sheet, substantially perpendicular to its length. However, in another embodiment the poles extend in lines parallel to the length of the magnetic sheet, and in a further alternative embodiment the poles extend in lines at an oblique angle to the length and width of the magnetic sheet. In yet further embodiments, the poles extend in non-linear lines, for example forming circular patterns.

Thus, as shown in Figure 4, the first surface 402 of the first layer 301 defines the series of magnetic poles 401, and the second surface 403 of the first layer is separated from the first surface by the thickness 302 of the first layer.

In the present, preferred embodiment, the first surface 304 of the second layer 303 is bonded to the second surface 403 of the first layer 301. i.e. the magnet first layer 301 has a first surface 402 defining a series of magnetic poles 401 and a second surface 403 to which the second layer 303 is bonded.

As will be understood, the sheet 101 is attachable to a ferromagnetic material, such as steel, by the magnetic field generated by the array of magnetic poles in the first layer 301. As mentioned above, the two layers 301 and 303 have different thicknesses in the various embodiments of the invention. Clearly as the thickness of the layers increases the weight per square unit of the sheet increases. Also, as its thickness increases, the magnitude of the magnetic field of the first layer 301 increases, but the magnitude of the magnetic field tends towards a plateau value. Consequently, for the correct functioning of the sheet, the thickness of the two layers has to be chosen such that the magnetic force generated by the sheet when applied to a ferromagnetic surface is sufficiently strong to support the weight of the sheet.

It should also be understood that, because the second layer has a relatively low emissivity and a high reflectivity, the sheet is useable to provide a barrier to radiant heat flow. For example, the sheet is attachable to a surface of a relatively hot object, for the purposes of minimising heat radiating from that surface. Alternatively, the sheet is attachable to a surface of a relatively cool object, for the purposes of maximising reflection and minimising radiant heat absorption by that surface.

### Figure 5

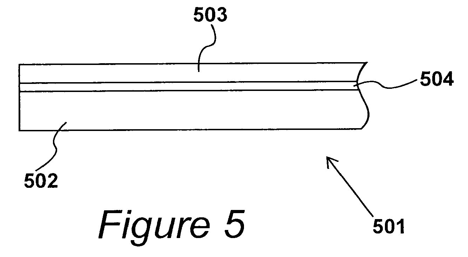

An enlarged side view of an alternative sheet 501 of layered material embodying the present invention is shown in Figure 5.

The alternative sheet 501 is generally the same as sheet 101 but differs in that it is formed by bonding a first layer 502 of magnetic sheet to a highly reflective second layer 503 by a layer of adhesive 504. In the present embodiment, the adhesive is an acrylic water based adhesive, but in alternative embodiments solvent based acrylic adhesive or a rubber based adhesive is used. It will be understood that in each embodiment, the adhesive is selected to be compatible with the range of temperatures to which the layered material will be subjected.

Details of the first layer 502 and the second layer 503 are substantially the same as described above for the sheet 101 of Figure 1.

### Figure 6

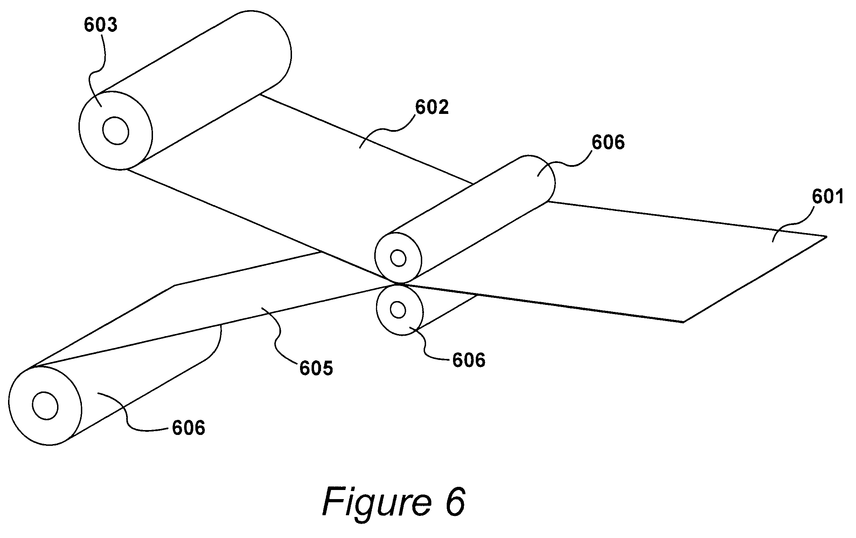

A method of manufacturing the layered material 601 from which sheet 101 is formed is shown in Figure 6. The layered material 601 is formed from aluminium foil 602 obtained in the form of a roll 603, and magnetic sheet 605 also obtained in the form of a roll 606. A bonding agent is applied to the magnetic sheet, and the magnetic sheet 605 and aluminium foil 602 are brought together between heated rollers 606, which apply heat and pressure to the sheet 605 and foil 602. In the present embodiment, the magnetic sheet comprises a thermoplastic material, and the heated rollers raise its temperature such that the sheet is bonded to the aluminium foil with the aid of the bonding agent.

The layered material 601 may subsequently be cut lengthways to the required width and chopped to the required length for supply in the required format (for example, in a pack of flat sheets or in a roll).

In an alternative method of manufacturing the layered material 601, it is formed immediately following the production of the magnetic sheet. For example, a method is envisaged in which the magnetic sheet 605 is formed by a calender machine, and while the magnetic sheet is still hot, and soft, it is passed between rollers along with the aluminium foil 602, to form the layered material 601.

The layered material forming the alternative sheet 501 is manufactured by a similar method to that illustrated in Figure 6. However, in place of plain aluminium foil 602, an aluminium foil to which a pre-applied contact adhesive is used. Such foil is commonly available for purchase. The aluminium foil and the magnetic sheet are brought together and passed between rollers to ensure bonding by the contact adhesive.

### Figure 7

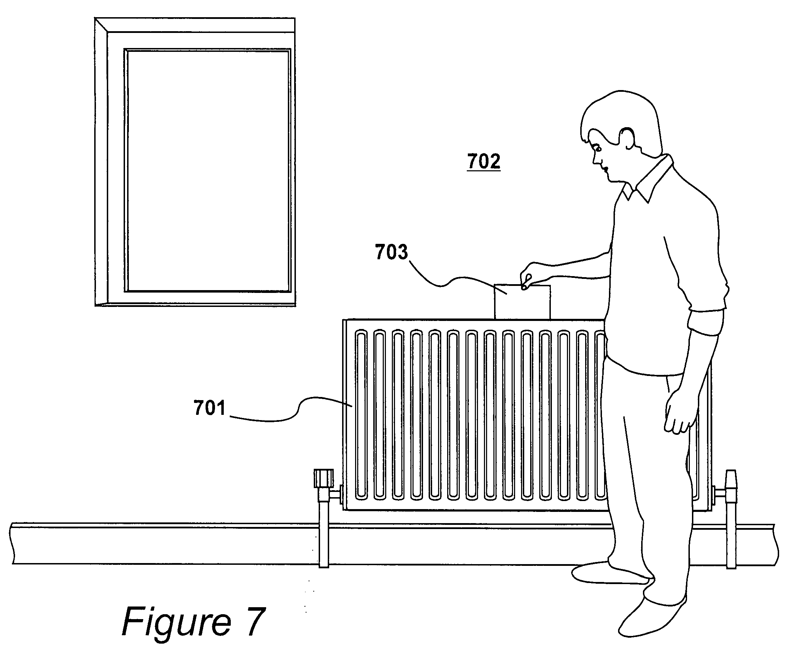

A method of providing a heat barrier layer to a radiator 701 is illustrated in Figure 7. The radiator 701 has a very common structure being formed of a pair of sheets of steel each formed into a shape such that when welded together they form channels for the passage of heated water.

As illustrated in Figure 7, it is well known to install radiators, such as radiator 701 against a wall such that only a small gap exists between the radiator and the wall. When the radiator is hot, heat is transported away from the radiator by conduction currents in the surrounding air, but also by radiant heat, i.e. infrared radiation. Heat radiating from the front of the radiator into the room increases room temperature as required, but heat radiating from the rear of the radiator to the adjacent wall only serves to heat the wall itself. This may not be a problem where the wall is an internal wall of the building. However, where the wall is an external wall (such as external wall 702 of Figure 7), the wall becomes hot and, as a result, heat is lost from the building through the wall.

In order to provide a barrier to heat radiating from the radiator 701 to the wall 702. Sheets of layered material, such as sheet 703 are applied to the rear of the radiator. The sheets, such as sheet 703, are formed of layered material as described above with reference to Figures 1, 2, 3, 4 and 6, but it should be understood that sheet material of the type described with reference to Figure 5 may be used as an alternative.

In a preferred method of providing a heat barrier layer between the radiator 701 and the wall 702, firstly dimensions of the radiator are measured. Sheets similar to sheet 703 are then cut to size, using scissors or a knife and steel rule, from a larger sheet such as sheet 101 or a roll such as roll 201.

The cut sheets are then slid into position and attached to the rear of the radiator by means of the magnetic layer of the sheets.

If the sheets are cut from a roll, such as roll 201, it is possible that they may retain a memory of their curled up form. i.e. they may not be flat. Consequently, before sliding the sheets into position behind the radiator, they may be returned to a flat configuration by locating them on a warm and substantially flat surface. For example, the sheets may be pressed against the warm side of a refrigerator or the front of the radiator until the magnetic sheet warms up and softens. The sheets may then be slid off the front and slid into their final position behind the radiator.

### Figure 8

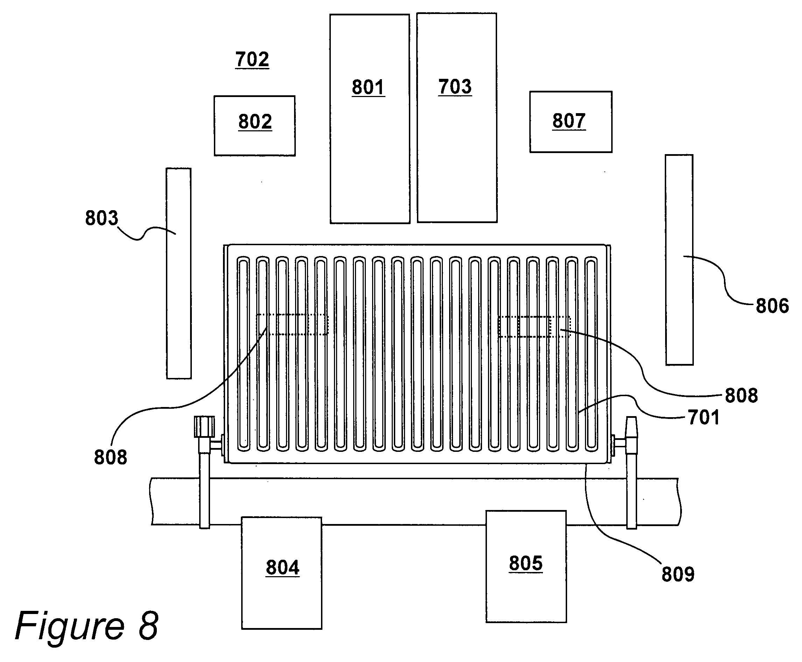

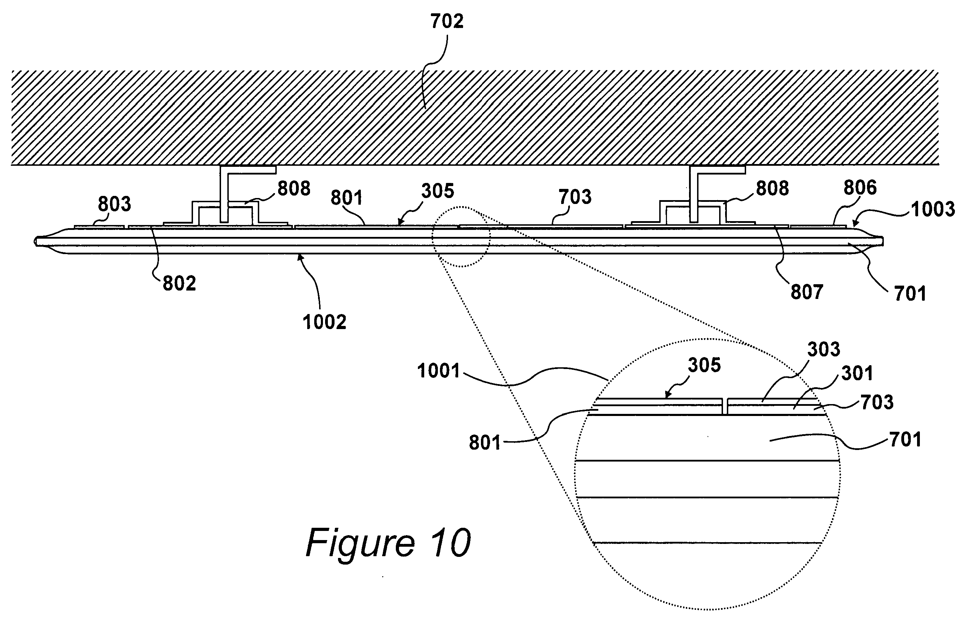

Several sheets of layered material 703 and 801 to 807 respectively are schematically shown around radiator 701 in Figure 8. The sheets 703 and 801 to 807 have been cut into rectangular pieces having a length and width configured to allow the pieces to be arranged edge-to-edge on the back face (1003 in Figure 10) of the radiator and around mounting brackets 808 of the radiator 701.

Having cut the sheets to size, the sheets 703 and 801 to 807 are fitted by simply sliding the sheets between the radiator and the wall 702 into their required position. Thus, in the present example sheets 703, 801, 802 and 807 may be slid from above down the back of the radiator 701 and sheets 804 and 805 may be slid upwards around the bottom edge 809 of the radiator 701. Sheets 803 and 806 may be slid down from above the radiator, or alternatively slid inwards at a respective side edge of the radiator.

It may be noted that the sheets, such as sheet 703 are easily manually removed from the back of the radiator by manually sliding them out. Thus, they are removable for purposes of cleaning and in particular for keeping clean the reflective/emissive outer surface of the second layer.

### Figure 9

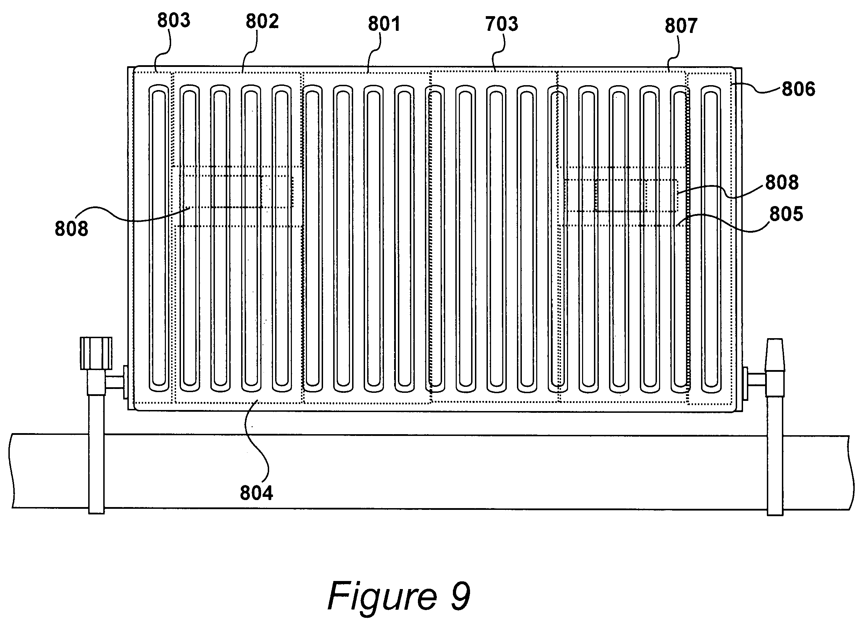

The radiator 701 is shown again in Figure 9 with sheets 703 and 801 to 807 in place.

### Figure 10

A plan view of radiator 701 is shown in Figure 10 with the sheets 703 and 801 to 807 in place.

The radiator 701 is of a type that does not have any heat exchanger fins on its back face 1003. Consequently, as shown in Figure 10, the sheets 703 and 801 to 807 are attached directly to the rear of the radiator by means of forces resulting from the magnetic field of the magnetic layer of the sheets.

As may be seen in an enlarged view 1001 of a portion of the radiator 701, the magnetic first layer 301 of the sheets is applied directly to the radiator 701, so that the second layer 303 faces the wall 702.

When the radiator is in use, and hot, heat is conducted to the sheets 703 and 801 to 807 and so their temperatures rise. However, the second layers 303 of the sheets 703 and 801 to 807 provide an outer surface 305 of low emissivity for infrared, and so the heat radiating from the radiator 701 to the wall 702 is greatly reduced by the presence of the sheets.

Thus the sheets effectively provide the radiator with a rear outer surface 305 that has a low emissivity, and consequently, the wall 702 receives less heat from the radiator 701 and less heat is lost through the wall 702 to the outside world.

In contrast, the front surface 1002 of the radiator is provided by a conventional radiator coating such as enamel, applied during production of the radiator, or radiator paint. Consequently, the front surface 1002 of the radiator has a relatively high emissivity when compared to the rear surface 305 provided by the aluminium foil. Thus during operation of the radiator, heat is radiated from the front surface of the radiator at a relatively high rate, while heat is radiated from the rear surface towards the wall at a relatively low rate.

### Figure 11

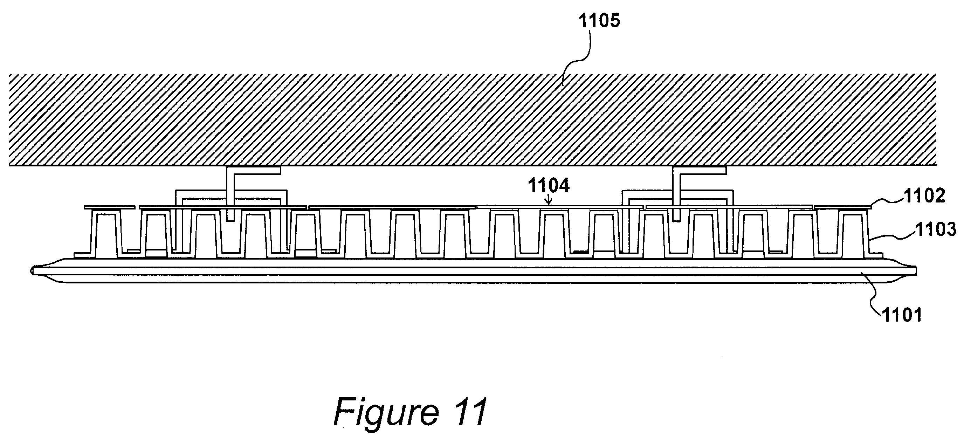

A plan view of an alternative radiator 1101 is shown in Figure 11 with sheets 1102 of the layered material 601 attached.

The sheets 1102 of material are substantially the same as the sheets 703 and 801 to 807 applied to radiator 701. The difference in this example is in the form of the radiator. Radiator 1101 is provided on its back surface with heat exchanging fins 1103 formed of corrugated steel.

As illustrated in Figure 11, the sheets 1102 of layered material are magnetically affixed to the heat exchanger fins 1103 in a plane generally parallel to the main body of the radiator 1101.

In this example, heat is conducted from the radiator 1101 through its fins 1103 to the sheets 1102. In addition, heat is radiated from the main body of the radiator 1101 to the sheets 1102. By these mechanisms, the temperature of the sheets 1102 rises during operation of the radiator 1101. However, sheets 1102 have a surface 1104 having a relatively low emissivity, and consequently, the radiant heat emitted to the wall is reduced by the presence of the sheets.

## Claims

1. A method of providing a heat barrier layer (703) to a surface of a radiator (701), said method comprising:
obtaining a piece (703) of layered material (601) comprising a magnetic first layer (301) defining magnetic poles (401) and a second layer (303) having a higher reflectance of infrared than said first layer; and
attaching said piece of layered material to a radiator (701) by means of a force produced by said magnetic poles, **characterised in that**:
said first layer (301) is attached directly to said radiator (701) such that said second layer (303) provides the radiator (701) with a low emissivity rear surface (305) relative to a front surface (1002) of said radiator (701).

2. A method of providing a heat barrier layer according to claim **1,** wherein said second layer comprises a metal sheet.

3. A method of providing a heat barrier layer according to claim **2,** wherein said metal is aluminium.

4. A method of providing a heat barrier layer according to any one of claims **1** to **3,** wherein said magnetic first layer is located between said second layer and said object.

5. A method of providing a heat barrier layer according to any one of claims **1** to **4,** wherein the method comprises measuring a dimension of said object and cutting a sheet of said layered material to a length determined from said dimension, to produce said piece of layered material.

6. A method of providing a heat barrier layer according to any one of claims **1** to **5,** wherein said radiator (701) is mounted on a wall (702) of a room, and said method comprises attaching said piece of layered material to said radiator such that said piece of layered material is located between said radiator and said wall.

7. Apparatus providing a heat barrier layer (703) to a radiator (701), comprising:
a radiator; and
a layered material (601), said layered material comprising:
a first layer (301) having a first surface (402) defining a series of magnetic poles (401) and a second surface (403) separated from said first surface by the thickness (302) of said first layer; and
a second layer (303) having a surface (304) bonded to one of said first surface and said second surface of said first layer, wherein said second layer provides a higher reflectivity of infrared than said first layer, **characterised in that**:
said first layer (301) is attached directly to said radiator (701) such that said second layer (303) provides the radiator (701) with a low emissivity rear surface (305) relative to a front surface (1002) of said radiator (701).

8. Apparatus according to claim **7,** wherein the second layer (303) is bonded to said second surface of said first layer.

9. Apparatus according to claim **7** or claim **8,** wherein said second layer provides a reflectance to long wavelength infrared of more than 90%.

10. Apparatus according to any one of claims **7** to **9,** wherein said second layer comprises a metal layer.

11. Apparatus according to any one of claims **7** to **10,** wherein said metal layer has a thickness of no more than 0.2mm.

12. Apparatus according to claim **10** or claim **11,** wherein said metal layer comprises aluminium.

13. Apparatus according to any one of claims **7** to **12,** wherein the layers of said layered material are bonded together by a heat bonding process.

14. Apparatus according to any one of claims **7** to **12,** wherein the layers of said layered material are bonded together by an adhesive layer.

## Patentansprüche

1. Ein Verfahren zur Anbringung einer Wärmeisolationsschicht (703) an die Oberfläche eines Heizkörpers (701), das Folgendes umfasst:
die Bereitstellung eines Stücks (703) eines mehrschichtigen Materials (601) bestehend aus einer magnetischen ersten Schicht (301), mit der die Magnetpole (401) festgelegt werden, und einer zweiten Schicht (303), die über einen höheren Reflexionsgrad der Infrarotstrahlung verfügt als besagte erste Schicht, sowie
die Anbringung des besagten Stücks des mehrschichtigen Materials an einen Heizkörper (701) mithilfe der durch die Magnetpole erzeugten Kraft; die Anbringung zeichnet sich durch Folgendes aus:
Besagte erste Schicht (301) wird direkt an besagten Heizkörper (701) angebracht, sodass der Heizkörper (701) durch besagte zweite Schicht (303) eine
Rückfläche (305) erhält, die im Vergleich zur Vorderfläche (1002) des besagten Heizkörpers (701) einen geringen Emissionsgrad aufweist.

2. Ein Verfahren zur Anbringung einer Wärmeisolationsschicht gemäß Patentanspruch **1,** wobei besagte zweite Schicht eine Metallplatte enthält.

3. Ein Verfahren zur Anbringung einer Wärmeisolationsschicht gemäß Patentanspruch **2,** wobei es sich bei besagtem Metall um Aluminium handelt.

4. Ein Verfahren zur Anbringung einer Wärmeisolationsschicht gemäß einem der Patentansprüche **1** bis **3,** wobei sich besagte magnetische erste Schicht zwischen besagter zweiter Schicht und besagtem Objekt befindet.

5. Ein Verfahren zur Anbringung einer Wärmeisolationsschicht gemäß einem der Patentansprüche **1** bis **4,** wobei besagtes Objekt im Rahmen des Verfahrens ausgemessen und ein Stück des besagten mehrschichtigen Materials
in der ermittelten Länge abgeschnitten wird, um besagtes Stück des mehrschichtigen Materials anzufertigen.

6. Ein Verfahren zur Anbringung einer Wärmeisolationsschicht gemäß einem der Patentansprüche **1** bis **5,** wobei besagter Heizkörper (701) an der Wand (702) eines Raumes befestigt ist und im Rahmen des besagten Verfahrens
das besagte Stück des mehrschichtigen Materials so an besagten Heizkörper angebracht wird, dass sich besagtes Stück des mehrschichtigen Materials zwischen besagtem Heizkörper und besagter Wand befindet.

7. Eine Vorrichtung zur Anbringung einer Wärmeisolationsschicht (703) an einen Heizkörper (701); die Vorrichtung umfasst Folgendes:
einen Heizkörper; und
ein mehrschichtiges Material (601) bestehend aus:
einer ersten Schicht (301) mit einer ersten Oberfläche (402), mit der eine Reihe von Magnetpolen (401) festgelegt wird, und einer zweiten Oberfläche (403), die durch die Dicke der besagten ersten Schicht (302) von besagter erster Oberfläche getrennt ist, und
einer zweiten Schicht (303), dessen Oberfläche (304) entweder an besagte erste und besagte zweite Oberfläche der besagten ersten Schicht geklebt wird, wobei besagte zweite Schicht über einen höheren Reflexionsgrad der Infrarotstrahlung verfügt als besagte erste Schicht; die Anbringung zeichnet sich durch Folgendes aus:
Besagte erste Schicht (301) wird direkt an besagten Heizkörper (701) angebracht, sodass der Heizkörper (701) durch besagte zweite Schicht (303) eine
Rückfläche (305) erhält, die im Vergleich zur Vorderfläche (1002) des besagten Heizkörpers (701) einen geringen Emissionsgrad aufweist.

8. Die Vorrichtung aus Patentanspruch **7,** wobei die zweite Schicht (303) an besagte zweite Oberfläche der besagten ersten Schicht geklebt wird.

9. Die Vorrichtung aus Patentanspruch **7** oder Patentanspruch **8,** wobei besagte zweite Schicht einen Reflexionsgrad der langwelligen Infrarotstrahlung von über 90 % aufweist.

10. Die Vorrichtung aus einem der Patentansprüche **7** bis **9,** wobei besagte zweite Schicht eine Metallschicht enthält.

11. Die Vorrichtung aus einem der Patentansprüche **7** bis **10,** wobei besagte Metallschicht nicht dicker als 0,2 mm ist.

12. Die Vorrichtung aus Patentanspruch **10** oder Patentanspruch **11,** wobei besagte Metallschicht aus Aluminium besteht.

13. Die Vorrichtung aus einem der Patentansprüche **7** bis **12,** wobei die Schichten des besagten mehrschichtigen Materials mithilfe einer Heißverklebung aneinander befestigt werden.

14. Die Vorrichtung aus einem der Patentansprüche **7** bis **12,** wobei die Schichten des besagten mehrschichtigen Materials durch eine Klebeschicht aneinander befestigt werden.

## Revendications

1. Méthode de réalisation d'une couche à barrière thermique (703) sur une surface d'un radiateur (701), ladite méthode comprenant :
l'obtention d'une section (703) de matériau stratifié (601) comprenant une première couche magnétique (301) définissant des pôles magnétiques (401), et une deuxième couche (303) présentant une réflectance à l'infrarouge supérieure à celle de ladite première couche ; et
la fixation de ladite section de matériau stratifié sur un radiateur (701) à l'aide d'une force produite par lesdits pôles magnétiques, **caractérisée en ce que** :
ladite première couche (301) est fixée directement sur ledit radiateur (701), de sorte que ladite deuxième couche (303) apporte au radiateur (701) une surface postérieure à faible émissivité (305) relativement à une surface antérieure (1002) dudit radiateur (701).

2. Méthode de formation d'une couche à barrière thermique selon la revendication **1,** ladite deuxième couche comprenant une feuille métallique.

3. Méthode de formation d'une couche à barrière thermique selon la revendication **2,** ledit métal étant de l'aluminium.

4. Méthode de formation d'une couche à barrière thermique selon une quelconque des revendications **1** à **3,** ladite première couche magnétique étant située entre ladite deuxième couche et ledit objet.

5. Méthode de formation d'une couche à barrière thermique selon une quelconque des revendications **1** à **4,** la méthode comprenant la mesure d'une dimension dudit objet et la coupe d'une feuille dudit matériau à une longueur prédéterminée d'après ladite dimension, afin de produire ladite section de matériau stratifié.

6. Méthode de formation d'une couche à barrière thermique selon une quelconque des revendications **1** à **5,** ledit radiateur (701) étant monté sur un mur (702) d'une pièce, et ladite méthode comprenant la fixation de ladite section de matériau stratifié sur ledit radiateur, de sorte que ladite section de matériau stratifié soit située entre ledit radiateur et ledit mur.

7. Appareil de réalisation d'une couche à barrière thermique (703) sur un radiateur (701), comprenant :
un radiateur ; et
un matériau stratifié (601), ledit matériau stratifié comprenant :
une première couche (301) comprenant une première surface (402) définissant une série de pôles magnétiques (401), et une deuxième surface (403) séparée de ladite première surface par l'épaisseur (302) de ladite première couche ; et
une deuxième couche (303) comprenant une surface (304) fixée sur une desdites première surface et deuxième surface de ladite première couche , ladite deuxième couche présentant une réflectivité supérieure à l'infrarouge que ladite première couche, **caractérisée en ce que** :
ladite première couche (301) est fixée directement sur ledit radiateur (701), de sorte que ladite deuxième couche (303) apporte au radiateur (701) une surface postérieure à faible émissivité (305) relativement à une surface antérieure (1002) dudit radiateur (701).

8. Appareil selon la revendication **7,** la deuxième couche (303) étant liée à ladite deuxième surface de ladite première couche.

9. Appareil selon la revendication **7** ou la revendication **8,** ladite deuxième couche présentant une réflectance de plus de 90 % à l'infrarouge de grande longueur d'onde.

10. Appareil selon une quelconque des revendications **7** à **9,** ladite deuxième couche comprenant une couche métallique.

11. Appareil selon une quelconque des revendications **7** à **10,** l'épaisseur de ladite couche métallique ne dépassant pas 0,2 mm.

12. Appareil selon la revendication **10** ou la revendication **11,** ladite couche métallique comprenant de l'aluminium.

13. Appareil selon une quelconque des revendications **7** à **12,** les couches dudit matériau stratifié étant liées ensemble par une méthode de thermo-soudage.

14. Appareil selon une quelconque des revendications **7** à **12,** les couches dudit matériau stratifié étant liées ensemble par une couche adhésive.
